# EUROPEAN PATENT APPLICATION

(11) **EP 2 993 630 A1**
(43) Date of publication of application: **09.03.2016**
(21) Application number: 15020151.5
(22) Date of filing: 02.09.2015
(51) Int. Cl.: G06Q 10/08

(54) **CLLABORATIVE SYSTEM OF MANAGEMENT OF ORDERS AND SUPPLIES AND THEIR DISTRIBUTIONS, REDUCING FOOD WASTAGE AND IMPROVONG PERFORMANCE OF PRODUCTS TO CONSUMERS**

(30) Priority: 03.09.2014 US 201462045497 P
(71) Applicant: Larivière, Roland, 75014 Paris (FR); Blois, Arnaud Bertrand Bernard, 27000 Evreux (FR)
(72) Inventor: Larivière, Roland Michel Marc, 75014 Paris (FR); Blois, Arnaud Bertrand Bernard, 27000 Evreux (FR)

(57) **Abstract**

A collaborative system, optimizing procurement management and reducing food wastage in establishments, such as restaurants, catering facilities or similar places making food available for purchase, by actively involving consumers in the operation of the system, is hereby disclosed. Using the system, establishment managers log in to a server and define products, and if applicable their related subproducts and ingredients, available for reservation by consumers. Managers arrange the products into a planning and input the related supplies; consumers then place reservations on products of said planning, assisted in their decisions by a decision-support computing module (DSCM). Said DSCM outputs data used to optimize the procurement performance and / or reduce food wastage, calculated on criteria such as maximization of time between reservation and consumption of products, ordering products close to expiry, portions matching preferences. The invention includes identification systems, and optional displays, to improve the delivery speed of requested products to consumers.

## Description

### BACKGROUND

### Field of the Invention:

The invention relates to a system improving the procurement performance and the food distribution for establishments. It reduces the amount of food wastage on both the establishment side and the consumer side. To do so, it shifts part of the responsibility of the procurement process, typically allocated to the establishment managers, to the consumers. Using the invention disclosed herein, consumers make their selections in advance, guided in their decisions by a decision-support computing module (DSCM) interacting with the reservation interface. The said module aims to optimize the procurement performance via parameters such as maximising the time between any order and the related date and time of service, and the adequation between quantities ordered and quantities served which also contributes to lower the amount of food wasted. The said module also aims to reduce the amount of food wasted by considering parameters such as the expiry dates of the products in stock and the past reservations of similar products.

### Description of the Related Art:

Several forms of booking systems already exist and are commonly used in restaurants: customers can be offered the opportunity to book a table at a given date and time for a given number of persons and sometimes a given favorite location in the premises. This sort of booking can be placed in various ways including by phone, by email, online or in person. Several websites are specialized in placing such bookings online. Regarding the catering industry, some facilities also offer the possibility for customers to book a table in advance, and can also offer the option to review and top up one's account online.

However, establishments, such as restaurants, catering facilities or similar places making food available for purchase, currently rely heavily on the fact that the customer will choose and place his/her order in person at the premises. Although some restaurants give their customers the option to order online or by phone, either to eat in or to take away, there is no significant difference in the management of products and the supply chain as there is not enough time to optimize the procurement. Establishment managers have to rely on their experiences, statistics or other methods to decide the quantities of ingredients and raw materials they need to order. They cannot accurately determine when and how much of these goods will be consumed. This exposes them to the risk of having an excess of supplies potentially leading to wastage, or on the contrary a shortage of supplies which would lead to customers not being served the product(s) they wanted in the quantities they needed.

Whilst there is no report of such systems in the catering industry, some instances of shared management with customers to place an order in advance can be found in several discount systems offered by some online booking websites for restaurants. However these systems offer a discounted price on selected menus only. In fact, these systems are mostly intended as commercial offers to entice more customers, and have only a moderate and indirect effect on the efficiency of the procurement. These commercial offers are created based on the managers' experience and / or past statistics, and are valid for a determined period. Unlike the invention described in the present document, they are not updated in real time and highly customized to each consumer based on computations of the most up-to-date data. There is currently no system that systematically involves consumers to an establishment's procurement by providing a computer-assisted decision support system to optimize consumers' requests.

### BRIEF SUMMARY OF THE INVENTION

The present document describes the invention which is a system comprising:
- one server, being one computing unit, or several computing units in a network, executing software enabling the operation of the invention, and having access to one or several databases.
- the apparatus and processes used for the planning and optimization regarding the consumers' orders and the deliveries of said orders to the consumers.
- a Decision-Support Computing Module (DSCM) which accesses parameters relative to the procurement of the supplies, and outputs data used to assist consumers placing reservations that would optimize the procurement process and / or reduce the amount of wasted food.

In an embodiment of the invention, the operator, being a person in charge of an establishment and having a valid account on the system, defines the products along with related information such as procurement lead time, related supplies, production costs and acceptable price ranges. In a preferred embodiment, the products are themselves composed of subproducts, expressed in terms of portions for the establishment supplies and consumer reservations. The operator then sets up a planning of the products. After logging in to the system, consumers consult the plannings of the establishment where they want to have their meal. A decision-support computing module (DSCM) performs an analysis based on parameters retrieved from the system database such as status of existing supplies, delivery date of future supplies, statistics regarding wastage history of the products, consumers' preferences and consumers' order status. The DSCM applies automatically or semi-automatically corrections and / or provides additional information to the planning in order to assist consumers to place optimal reservations in terms of supply management, based on criteria such as maximizing the time between reservation of a product and its effective delivery; and in terms of food wastage, based on criteria such as consuming supplies close to their expiry dates and reservation of the exact quantities of products that will be consumed. For instance, in an embodiment of the invention, the additional information is a score reflecting how optimal reserving any given subproduct would be. In another embodiment, the DSCM encourages consumers to make optimal decisions using a reward system that would make optimal reservations more attractive. In another embodiment, the price of the different subproducts is adjusted by the DSCM to promote products which are about to expire, and / or to maximize how long in advance said reservation is placed and / or minimize the value or quantity of the expected wastage.

The consumers can then order said products of the planning, adjusting the quantities based on their preferences and the information provided by the DSCM. In a preferred embodiment, the consumers have the option to adjust the number of portions of the subproducts related to the products to their preferences.

Once the reservation period for a service-datetime, defined in the "detailed description" section of the present document, is closed, the operator has an exact knowledge of the orders to fulfill for said service-datetime, which contributes to improve the procurement performance and reduce potential food wastage. On the day of the service, the operator arranges for the orders to be prepared, and either served directly to the consumers or marked as available for collection, assisted by displays and identification systems linked to an embodiment of the present invention.

### BRIEF DESCRIPTION OF THE DRAWINGS

- FIG. 1 illustrates the overall system, according to one embodiment of the present invention.
- FIG. 2 illustrates how an operator defines a product, according to a preferred embodiment of the present invention.
- FIG. 3 illustrates how an operator sets a planning, according to a preferred embodiment of the present invention.
- FIG. 4 illustrates the workflow of the system related to the reservation of a product by a consumer, according to a preferred embodiment of the present invention.
- FIG. 5 illustrates an example of a booking list for a service, according to a preferred embodiment of the present invention.
- FIG. 6 illustrates an example of delivery in a self-service establishment, according to a preferred embodiment of the present invention.

### DETAILED DESCRIPTION OF THE INVENTION

The detailed embodiments of the present invention are described herein. It should be understood, however, that the disclosed embodiments are merely ways of implementing the invention, which may be embodied in various forms. Therefore, the details disclosed herein are not to be interpreted as limiting, but merely as a basis for the claims and as a basis for teaching one skilled in the art how to make and / or use the invention.

The following definitions apply for the rest of the document.
1. An "establishment" refers to any restaurant, catering facility or similar business making food or beverages available for purchase, such as a pub, bar, eatery, canteen, etc.
2. "Product" refers to any good, food, beverage or any other good, sold by an establishment, and available for purchase to the consumers of the said establishment.
3. In a preferred embodiment of the invention, a "subproduct" refers to a component of a product. A product consists of one or several subproducts depending on its complexity, a subproduct being a part of the product that can be served in different proportions (e.g. rice and meat are two subproducts of the product "rice with meat"). A subproduct may be perishable and has then an expiry date. Past this date, the subproduct can no longer be sold to consumers and has to be disposed of.
4. In a preferred embodiment, a "portion" is a fixed quantity of a subproduct, either expressed per unit (e.g. one portion of one steak), per volume (e.g. 50 mL of ice cream) or per weight (e.g. 100 grams of rice). Portions constitute indivisible units used to represent the availabilities of subproducts in the supplies, when placing orders and when serving the product (e.g. 100 grams of rice constitutes one portion of the subproduct rice. Consumers may choose one, two or three portions of rice).
5. The "supply" of a given product, or ingredient, refers to the amount of the said product, said ingredient, expressed in any unit (e.g. kg, mL, gal), or in terms of portions (e.g. 30kg of rice would correspond to 300 rice portions of 100g each) in the inventory of the establishment that has been, or will be, delivered at a given date. In a preferred embodiment, supplies also apply to subproducts, and can be expressed in terms of portions, or any other equivalent unit (e.g. a supply of 300 kg of rice corresponds to 3000 rice portions of 100g each).
6. A "user" is a person who can interact with the system via an interface linked to the server.
7. An "operator" is a designated user in charge of the management of one or several establishments in the system, and can access the system with privileges, enabling editing actions for the said establishments such as defining, configuring and reviewing the list of products, subproducts and supplies, setting up plannings, accessing statistics regarding the consumption of the products, defining input and optimization parameters and functions of the DSCM.
8. A "service-time" is a time period defined by the operator during which consumers can go to the premises of the establishment to collect and / or consume the products they have reserved in said establishment for said service-time on a given date. Typical service-times would be for instance "Lunch: 11am to 2pm" or "Dinner: 7pm to 9pm". If the products reserved are to be delivered to the consumers, it is the time period defined by the operator during which the delivery of said reserved products is scheduled to take place. A service-time in that case would be for instance "Delivery slot: 11am to 11:30am"
9. A "service-datetime" is the service-time of an establishment on a given date, e.g. "Lunch: 11am to 2pm on the 12/02/2017".
10. A "planning" is the list of products that are offered for consumption at an establishment on a given service-datetime specified by an operator of said establishment. These products can be reserved up to a certain time in advance, set by the operator, after which the reservation period for said service-datetime is closed.
11. A "consumer" is a user of the system who can access the plannings, can reserve products and can receive the orders on the service-datetime planned.
12. A "reservation" refers to the booking by a consumer of an element of a planning, i.e. a product at a given date and a given time or service-datetime, along with the requested number of portions for each associated subproducts in a preferred embodiment.
13. A "shelf" is a form of classification of the products, set by the operator and corresponding to their arrangement in the establishment (e.g. appetizer, entree, dessert).
14. In the present document, the "server" has to be understood as any computer hardware or computer software, or group of such in a network, enabling the operation of the system, and to which users can connect either directly or remotely via protocols such as Secure Shell (SSH) or HyperText Transfer Protocol (HTTP or HTTPS). In a preferred embodiment, user interactions with the server are performed via an interface that may be accessed using a computer, a smartphone, a tablet or any electronic device supporting the connection.
15. A decision-support computing module (DSCM) is a computing unit, hardware and / or software, or group of computing units in a network, able to access the database of the system to retrieve, if applicable, data such as information regarding said products, plannings, supplies, consumers; and outputting data used to assist consumers with making decisions when interacting with the embodiment of the system, such as when placing orders or setting preferences. The calculations performed by the DSCM to output data can be heuristic and / or algorithmic and are based on parameters such as past reservation history, time between reservation and related service-datetime, nature of the products and constituting ingredients, delivery dates of past and future supplies.

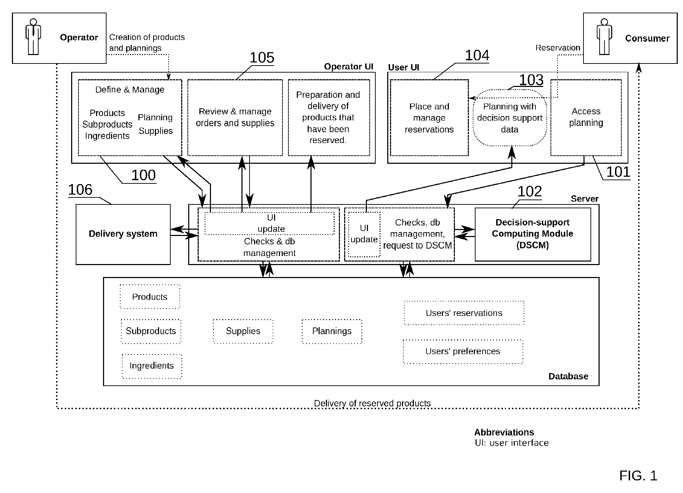

FIG. 1 shows an overall view of an embodiment of the system and the interaction with users. To initiate the system, the operator defines products and sets a planning (100) for the consumers of his or her establishment through the user interface. When a consumer requests the consultation of said planning through the interface (101), the DSCM analyzes the input data and after computation outputs data used to provide decision-support to said consumer (102). The requested planning is then rendered along with decision-support information (103) and displayed to said consumer, who can then place reservations (104). Once the booking period is closed for the service-datetime associated with the planning, the operator has the complete list of reservations for said service-datetime which he or she can review and manage (105). The operator then arranges the delivery of the products to the consumer who reserved them (106) using a delivery system connected to the server. Depending on the type of delivery required, (e.g. at the table, delivery to consumers, self-service and / or take-away), the delivery system can be implemented to signal to the consumer what he or she had ordered and how to collect it, or to enable the delivery to said consumer.

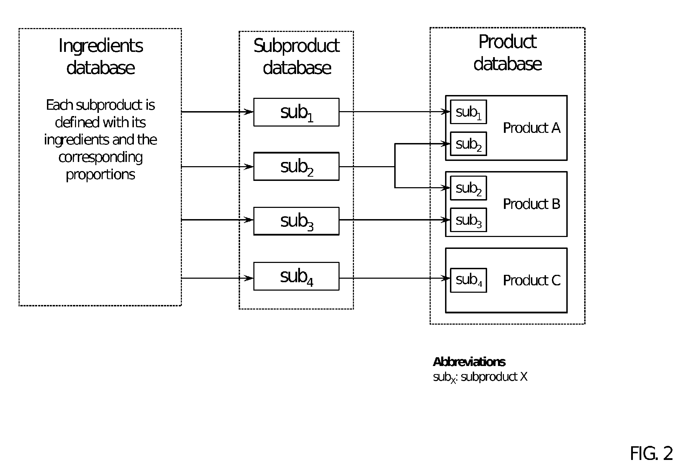

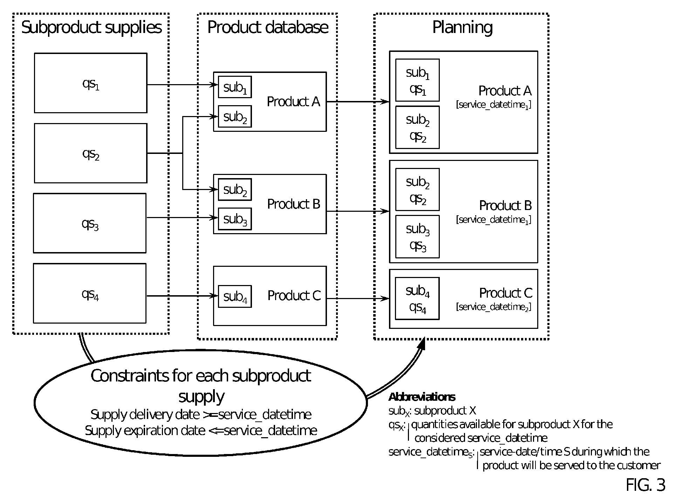

The first step for the operator is to define the products as shown in FIG. 2. This definition involves inputting information regarding the products. In a prefered embodiment, said information would include product name, description and any other relevant information such as shelf, production cost, delivery cost, cost of disposal if wasted. In a preferred embodiment, the operator then assigns to products their constituting subproducts. The subproducts can either be selected from a list of existing subproducts, or can be instantiated at that point. A subproduct has a name and may have a description and optional lower and upper bounds for the number of portions that can be booked by a consumer per reservation (e.g. the operator requires a minimum booking of one portion of rice and a maximum of three portions of rice when booking the product "Meat with rice"). In a favorable embodiment, further information is input for subproducts, such as production cost, delivery cost, cost of disposal if wasted, procurement lead time, to enable a more accurate optimization by the DSCM. In a preferred embodiment, the operator can then input the supplies for the different subproducts as shown in FIG. 3. In order to be considered as available and in stock on the day of a reservation, a supply must have been delivered by the date said reservation is for and not expired on said date. The operator is free to adjust the supplies to match the demand for a subproduct, for instance by increasing the expected supplies of a heavily booked subproduct, or by decreasing the expected supplies of a less booked subproduct to reduce potential wastage (105).

In another embodiment, the planning is automatically generated based on consumers' reservation history and / or supplies inputs and / or planning history.

In a less favorable embodiment which does not involve subproducts, the supplies of a product are expressed in unit of said product (eg two portions of product "hamburgers with fries").

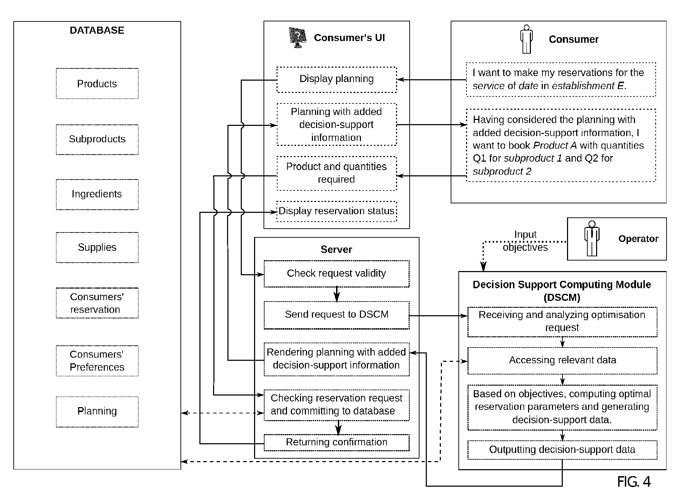

Once the operator deems the planning ready, the operator publishes said planning which is then accessible by the consumers of the establishment (101). The consumers can then log in to the system and access the planning (102). In a preferred embodiment, to be able to place an order, a consumer has to have an account for which direct payment is enabled and correctly set up, or a "wallet" corresponding to some prepaid amount linked to this account which has been credited to a satisfactory value using any accepted payment option. In a less favorable embodiment, the consumer is billed at specific times, or pays at the premises when collecting his or her orders. The workflow (104) of the booking of a product by a consumer in a favorable embodiment is shown in detail in FIG. 4.

When receiving a request to display the planning to a consumer, the server sends a request to the DSCM (102) instructing it to run an optimization process. Several data inputs can be considered depending on the existence of said data, and on the required level of integration between the DSCM and the establishment as well. In a prefered embodiment, the DSCM has access to an expansive range of data including past supplies and statistics regarding wastage, product and subproduct production costs and expiry dates, deadlines to order supplies, expected deliveries of supplies, supplies in stock, statistics regarding consumers' attendance, preferences and reservation history. The DSCM then performs an optimization process to output data used to assist consumers' decisions regarding reservations that are optimized to improve the procurement process and reduce food wastage. In a favorable embodiment, the optimization is based on criteria such as minimization of waste weight and / or minimization of waste based on original value of wasted products and / or minimization of associated CO₂ footprint and / or minimization of other environmental impact (use of water, pesticide, etc) and / or maximization of compatibility with consumers' preferences and / or maximization of profit. In a very favorable embodiment, the criteria can be adjusted by the operator and / or by an admin, an admin is a person independent from the establishments and who has privileged access to the system. The output data can be either human-readable and / or be in a data format suitable for transmission to another computing unit. From the output data, the server renders a planning with decision-support elements which is then displayed to the consumer. Such decision-support elements include promoting products by highlighting them on the planning, adding an information message designating the optimal choice and related explanations, giving a score next to each subproduct of the product. Other decision-support elements includes associating products of the planning to a number of credits or tokens based on how optimal the reservation of said products would be, which are added to the consumers' account on the system upon reservation. Another option is to set-up the DSCM to calculate a function used to modulate prices to make products more attractive depending on how optimal the reservation of said products would be. In a favorable embodiment, the consumer can also request access to only a limited part of the planning (e.g. only service-times from 11:00 to 12:30 over a period of one week). The consumer can also request access to individual products of the planning directly. The DSCM then returns decision-support regarding said limited part of the planning / said individual product (e.g. score, associated credits, price-modulating function).

In a prefered embodiment, when the consumer wishes to place a reservation on one of the products from the planning with decision-support information, the interface instructs said consumer to enter the desired number of portions for the subproducts constituting said product. The desired number of portions is not asked if the operator has set a fixed number assigned for each constituting subproduct, for instance by setting the minimum and maximum bookable quantities to be equal, in which case the booking of the product is effective immediately. In a favorable embodiment where the DSCM can access the consumers' preferences and past reservations, the system recommends to the consumers only products they are likely to order, in portions matching their needs. The consumers can adjust more precisely the nature and quantities of their orders, which reduces the amount of food left unconsumed and wasted after their meals, reducing food wastage. In a favorable embodiment, the reservation process can be partially or fully automated to always select the optimal choice as designated by the DSCM.

In a favorable embodiment, as long as the reservation period of a service-datetime is not closed, the consumer can alter his or her reservations for said service-datetime. In a prefered embodiment, the consumer can reduce or increase, within bounds set by the operator, the quantity of each subproduct in said reservations. In a favorable embodiment, the consumer is also assisted by the DSCM which outputs decision-support information when the consumer requests a change in reserved quantities.

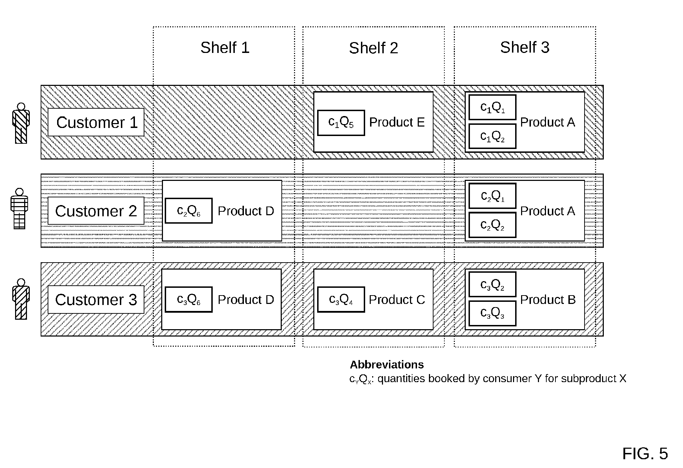

Once the booking period of a service-datetime is closed, the operator has an accurate list of the orders to fulfill for said service-datetime. The operator can then prepare the products reserved by the consumers according to the requested customized quantities (as shown in FIG. 5). The products related to remaining supplies which have not been booked during the intended time may be made available to the consumers on the day of the service-datetime for immediate consumption without booking. Remaining supplies may be placed on specific counters referred to as "free area" in the following.

Delivery of the products depends on how the operator serves orders to consumers (106). If orders are delivered directly to the consumers, an operator of the establishment first identifies consumers using an identification system such as electronic swipe cards or in less favorable embodiments biometry, passwords, visually checking consumers' identification cards or any other technique. Said operator then checks the orders related to the current service-datetime using a display, such as a screen, tablet, phone or terminal, or printed out by a printing device. Said operator can then have said orders prepared and delivered to the consumer who had ordered them.

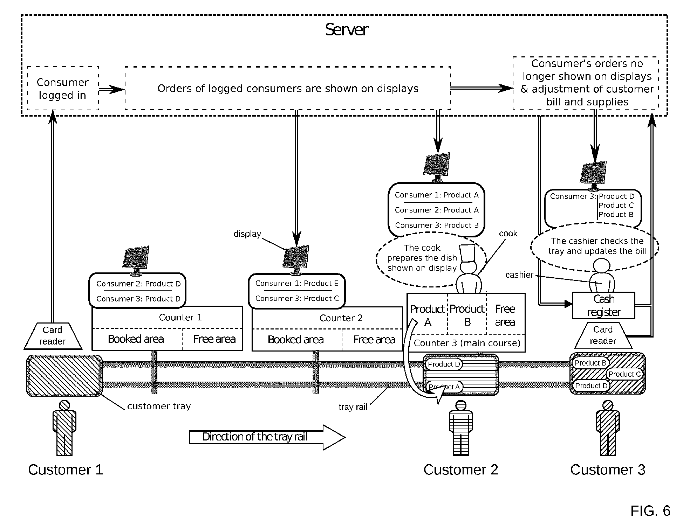

In a self-service establishment, for instance a catering facility where consumers have to collect products themselves, the preferred embodiment of the system is disclosed in FIG. 6. During the service-datetime, each consumer is identified thanks to an identification technique such as an electronic swipe card, or in less favorable embodiments password, biometry, visually checking an identification card or any other identification technique.

In FIG. 6 the identification is performed by the consumer swiping an electronic card over a card reader at the entrance of the establishment premises. Once identified, the name (or username) of said consumer is displayed on the displays, as well as the product/subproduct choices corresponding to the reservations of said consumer for the current service-datetime of said establishment. If the product is not directly accessible in self-service to said consumer, for instance the main course of a meal requiring assistance from the establishment staff, the cook helping the consumer is directly informed of the nature of the product and associated customized portions by using a display connected to the system and can start the preparation of said product. Meanwhile, the consumer is free to go through the different counters where the products in self-service of his/her order are located to serve himself or herself, using displays connected to the system showing reminders of the products the consumer had ordered.

Alternatively, a less favorable embodiment is to implement the above example without the use of displays by connecting the identification device at the entrance to a printing device that prints out a reminder listing the consumer's choices after successful identification. The cook in charge of preparing the products requiring assistance can then be informed of the consumer's orders either orally or by checking the printed list.

The consumer may also have the option to adjust his / her tray by picking any product from the "free areas". Before going to the cashier, the consumer collects the products requiring assistance which he / she had booked and that have been prepared by the cook.

At the end, the consumer goes to the cashier and is identified again. The cashier checks said consumer's tray, adjusts the bill if necessary, and validates the reservation thereby confirming its effective delivery to said consumer, using a computer, terminal, tablet or any other interactive display linked to the system. In a less favorable embodiment, the consumer can perform the verification, adjustment and validation aforementioned himself or herself.

In a favorable embodiment, an electronic system can be implemented to assist the cashier, or in a less favorable embodiment the consumer, performing the final validation, for instance by reading barcode, RFID tags, by performing automatic recognition of the products and subproducts using a camera and recognition software, or by any electronic device that identifies products chosen by the consumer and transmits these data to the system. The validation data is then fed back to the server which updates the database accordingly.

### REFERENCES

| **Cited Patent** | **Title** |
|---|---|
| US20140058794 A1 | Method And System For Orders Planning And Optimization With Applications To Food Consumer Products Industry |
| WO 2000041102 A2 | Online ordering system, especially for restaurants, and method for operating an online ordering system of this type |
| WO 2013156645 A1 | System for controlling and managing group catering, and associated method |
| WO 2004066052 A2 | Device for transmitting the orders and wishes of customers in a restaurant |
| US 20100287009 A1 | Discounted restaurant reservation distribution system |
| US 7610208 B2 | Booking method and system |
| US 4797818 A | Food order/delivery system |
| US 8655743 B1 | System and method for online management of restaurant orders |

## Claims

1. A collaborative system, managed by one or several operators, involving the consumers into the procurement process of an establishment by providing computer-assisted decision-support information to optimize said consumers' requests, comprising:
a server;
one or several databases accessible by said server;
and also comprising, and **characterized by**:
a Decision-Support Computing Module (DSCM) outputting data used to provide consumers during their interactions with said system with decision-support information; and performing an optimization process based on at least one of the following criteria:
- maximization of the time between a reservation and its related service-datetime
- minimization of potential food wastage in terms of waste weight and / or original value of wasted products and / or environmental impact
- maximization of compatibility between reservations placed by consumers and said consumers' preferences inferred using statistics and / or past reservations and / or expressed by said consumers and input into the system.
Said system is enabling:
- said operators to define and configure products in said databases via a user interface;
- said operators to create plannings of said products for said establishments by defining via a user interface when the said products are to be made available for consumption;
- said consumers to consult said plannings and to place reservations of said products with the decision support provided by said DSCM, via a user interface.

2. The system, according to claim 1, wherein said server and / or DSCM and / or databases are common and centralized for two or more establishments.

3. The system, according to claim 1, enabling said operators to define and configure past and / or current and / or future supplies of said products in said databases;

4. The system, according to claim 1, where past and / or current and / or future supplies of said products in said databases are defined and / or updated automatically by the system;

5. The system, according to claim 1, wherein the DSCM also provides decision-support information to the operator during the definition of products and subproducts, and / or the creation of a planning and / or the management of supplies.

6. The system, according to claim 1, wherein the planning is automatically generated based on consumers reservation history and / or supplies inputs and / or planning history and / or customers' preferences.

7. The system, according to claim 1, wherein data related to supplies and / or products are automatically accessed and / or retrieved and / or imported from a different system.

8. The system, according to claim 1, wherein products are composed of subproducts expressed in terms of portions, being any indivisible unit said subproducts are to be made available to consumers and represented in supplies.

9. The system, according to claim 8, wherein data related to subproducts are automatically accessed and / or imported from a different system.

10. The system, according to claim 1, where the output of said DSCM is used by said server to automatically create customized reservations to said consumers.

11. A delivery system to be installed in an establishment and connected to the system of claim 1, enabling the delivery to a consumer, by the establishment staff and during a service-datetime of said establishment, of the reservations placed by said consumer for said service-datetime of said establishment, comprising:
at least one identification system to identify consumers;
the software and hardware required to retrieve from said system of claim 1 the reservations placed by said identified consumers corresponding to the current service-datetime;
one or several display devices displaying said reservations to said establishment's manager and / or staff; and / or a printing device printing out said reservations.

12. A system to be installed in a self-service establishment and connected to the system of claim 1, enabling the consumers to collect the orders they had placed on said system of claim 1, comprising:
at least one identification system to identify consumers;
the software and hardware required to retrieve from said system of claim 1 the reservations placed by said identified consumers corresponding to the current service-datetime;
One or several display devices displaying said reservations to said consumers and / or a printing device printing out said reservations as a reference for said consumers.

13. The system, according to claim 11, comprising at least one additional identification system and related computing unit providing a user interface to said system to enable a verification and / or validation and / or bill adjustment and / or update data regarding said reservation by a member of staff, or automated system, in said establishment.

14. The system, according to claim 12, comprising at least one additional identification system and related computing unit providing a user interface to said system to enable a verification and / or validation and / or bill adjustment and / or update data regarding said reservation by a member of staff in said self-service establishment.
